# EUROPÄISCHE PATENTSCHRIFT

(11) **EP 3 363 600 B1**
(45) Veröffentlichungstag und Bekanntmachung des Hinweises auf die Patenterteilung: **21.04.2021**
(21) Anmeldenummer: 18150170.1
(22) Anmeldetag: 03.01.2018
(51) Int. Cl.: B25H 3/00, B25H 3/02, B65D 81/20, B05B 15/50

(54) **VORRICHTUNG ZUM AUFNEHMEN EINER KLEBERAUFTRAGSEINHEIT SOWIE VERFAHREN**
DEVICE AND METHOD FOR RECEIVING AN ADHESIVE APPLICATION UNIT
DISPOSITIF DE RÉCEPTION D'UNE UNITÉ D'APPLICATION D'ADHÉSIF AINSI QUE PROCÉDÉ

(30) Priorität: 21.02.2017 DE 102017202761
(43) Veröffentlichungstag der Anmeldung: 22.08.2018
(73) Patentinhaber: HOMAG GmbH, 72296 Schopfloch (DE)
(72) Erfinder: Schmid, Johannes, 72181 Starzach (DE); Götz, Frieder, 77761 Schiltach (DE); Danner, Jonas, 72175 Dornhan (DE)
(74) Vertreter: Hoffmann Eitle

(56) Entgegenhaltungen:
- KR-A- 20090 039 152
- KR-A- 20110 006 506
- US-A1- 2008 236 104
- US-A1- 2016 183 651
- US-B2- 7 931 052

## Beschreibung

### Technisches Gebiet

Die vorliegende Erfindung betrifft eine Vorrichtung (Service-Station) zum Aufnehmen von Kleberauftragseinheiten für Kantenanleimmaschinen, wie beispielsweise eine PUR-Kleberauftragseinheit, sowie ein Verfahren zum Lagern von Kleberauftragseinheiten.

### Technischer Hintergrund

Seitens der Anmelderin wurde intern erprobt, eine Kleberauftragseinheit, insbesondere eine PUR-Kleberauftragseinheit während der Nichtbenutzung in einer Stickstoffatmosphäre zu lagern, wobei der Stickstoff eine bestimmte Feuchtigkeitsreinheit benötigt, um eine duroplastische Vernetzung (Aushärtung) zu unterbinden.

Bei der Beleimung von Werkstückflächen oder Beschichtungsmaterialen während der Beschichtung von Oberflächen, werden Kleberauftragseinheiten verwendet. Diese werden im Allgemeinen in der Form von Walzensystemen oder Auftragsdüsensystemen ausgeführt. Während des Beleimungsvorgangs werden diese mit einem Klebstoff, insbesondere mit einem PUR-Klebstoff, versorgt, der mit Feuchtigkeit in der Umgebungsluft und, oder dem zu verarbeitenden Material (Untergrundmaterial) reagiert und dabei duroplastisch aushärtet. Aus diesem Grund ist es notwendig, den Klebstoff vor der Verarbeitung hermetisch gegen Luft abzuschirmen. Da während der Beleimung der jeweiligen Oberflächen der Klebstoff immer im Fluss ist und stetig auf die Oberflächen aufgebracht wird, und in der Regel nur kurze Taktzeiten vorliegen (kurze Unterbrechung der Zuführung des Klebstoffs beim Werkstückwechsel), ist es nicht notwendig die Kleberauftragseinheiten zusätzlich abzuschirmen.

Nach dem Gebrauch der Kleberauftragseinheiten reagiert jedoch das in der Umgebungsluft bzw. in dem zu verarbeitenden Material vorhandene Wasser mit dem Klebstoff, insbesondere mit dem PUR-Klebstoff, und sorgt dafür, dass dieser aushärtet. Wird die Kleberauftragseinheit nicht vor der Luftfeuchtigkeit geschützt oder gleich weiter verwendet, führt diese Reaktion zu einem Ausfall der Kleberauftragseinheit. In der Regel müssen in einem solchen Fall die Walzen bzw. Düsen sowie die Zuführleitungen ausgetauscht werden. Um dies zu verhindern ist es im Stand der Technik bekannt, in die Kleberauftragseinheiten eine Reinigungsmasse einzufüllen, welche den Klebstoff verdrängt und somit eine Aushärtung des Klebstoffs in der Kleberauftragseinheit verhindert. Dieser Vorgang ist jedoch äußerst zeit- und materialintensiv und wird daher in der Regel nur bei längeren Produktionspausen durchgeführt.

Soll hingegen die Kleberauftragseinheit nur über ein paar Tage gelagert werden, kann die Kleberauftragseinheit in einer Umgebung mit geringer Feuchtigkeit eingelagert werden. Dies kann beispielsweise unter Verwendung von Inertgas (z.B. Stickstoff) realisiert werden. Hierzu wird ein Behälter, in dem die Klebeauftragseinheit zur Einlagerung aufgenommen ist, mit Inertgas gefüllt, wodurch die in dem Behälter enthaltene Umgebungsluft, welche eine ortsabhängige Luftfeuchtigkeit aufweist, verdrängt wird. Zur Sicherstellung, dass der Behälter luftdicht ist, wird das Behältnis geringfügig unter Überdruck gestellt. Hierbei darf das Inertgas eine bestimmte Feuchtigkeitsmenge (Luftfeuchtigkeit) nicht überschreiten.

In der KR 10 2009 0039152 A beschreibt eine Munitionskiste, die mit einer Vakuumpumpe verbunden werden kann.

In der US 7,931,052 B1 zeigt einen Behälter zum Aufnehmen von Gegenständen in einem Vakuumzustand.

Ferner sind die Dokumente KR 1020110006506 A und US 2008/0236104 A1 bekannt.

### Gegenstand der Erfindung

Ziel der vorliegenden Erfindung ist es, eine Vorrichtung zum Aufnehmen von mindestens einer Kleberauftragseinheit sowie ein Verfahren zur Lagerung zumindest einer Kleberauftragseinheit bereitzustellen, um eine Aushärtung des zu auftragenden Mediums während der Lagerung der Kleberauftragseinheit zu unterbinden sowie die Einlagerung der Klebeauftragseinheit zu vereinfachen.

Die Aufgabe wird gelöst durch eine Vorrichtung nach Anspruch 1 sowie ein Verfahren nach Anspruch 12. Bevorzugte Weiterbildungen der Erfindung sind in den abhängigen Ansprüchen gegeben.

Einer der Gedanken der vorliegenden Erfindung ist es, eine Aushärtung eines Klebstoffs, während der Lagerung (Einlagerung) einer Kleberauftragseinheit durch Aufnehmen der Kleberauftragseinheit in einem unter Vakuum gesetzten Vakuumbehälter zu unterbinden.

Mittels der vorgeschlagenen Vorrichtung bzw. dem vorgeschlagenen Verfahren ist es auf einfache und effiziente Weise möglich, eine Aushärtung des aufzutragenden Mediums während der Lagerung (Einlagerung) zu unterbinden. Aufgrund der Tatsache, dass lediglich die Erzeugung eines Vakuums in dem Vakuumbehälter, in dem die Kleberauftragseinheit eingelagert ist, notwendig ist, um zu gewährleisten, dass eine ausreichend niedrige Feuchtigkeitsmenge in dem Vakuumbehälter gewährleistet ist, kann auf einfache Weise sichergestellt werden, dass der in der Kleberauftragseinheit nach der Verwendung verbleibende, aufzutragende Klebstoff, nicht aushärtet. Hiermit kann auf die im Stand der Technik notwendigen Verbrauchsmedien wie Inertgas, trockene Luft, Trockenpatronen und dergleichen verzichtet werden.

Gemäß der vorliegenden Erfindung weist die Vorrichtung die Merkmale gemäß Anspruch 1 auf.

Der Durchlass kann beispielsweise als Vakuumanschluss ausgebildet sein, der innerhalb des Behältergehäuseabschnitts oder am Behältergehäuseabschnitt vorgesehen ist. Ferner ist es möglich, dass eine Vakuumerzeugungsvorrichtung innerhalb des Behältergehäuseabschnitts vorgesehen ist und der "Durchlass" einen Ausgang der Vakuumerzeugungsvorrichtung betrifft. Somit kann eine Vakuumerzeugungsvorrichtung ebenfalls innerhalb oder außerhalb des Behältergehäuseabschnitts angeordnet sein.

Die hier beschriebene Einlagerung im Sinne der vorliegenden Erfindung bezieht sich auf eine Einlagerung (Einlagerungsdauer) von nur wenigen Tagen bis zu einer Woche. Sollte eine längere Einlagerung notwendig sein, ist es besser die Kleberauftragseinheiten vollständig zu reinigen, z.B. anhand einer Reinigungsmasse, die in die Kleberauftragseinheit eingeführt wird, um den aufzutragenden Klebstoff zu verdrängen.

Anhand der obig beschriebenen Vorrichtung der vorliegenden Erfindung ist es möglich, auf einfache Weise eine oder mehrere Kleberauftragseinheiten ohne großen Reinigungs-und Wartungsaufwand für wenige Tage einzulagern. Hierbei ist es lediglich notwendig, die Kleberauftragseinheit von einer Bearbeitungsvorrichtung wie zum Beispiel einer Beleimungsstation (Kantenanleimmaschine) zu demontieren, die Kleberauftragseinheit in einen Vakuumbehälter der beanspruchten Vorrichtung einzuführen, in diesem bevorzugt formschlüssig aufzunehmen und ggf. zu halten und anschließend den Vakuumbehälter luftdicht abzuschließen und unter ein vorbestimmtes Vakuum-Niveau zu setzen. Anhand des erzeugten Vakuums in dem Vakuumbehälter wird eine ausreichend niedrige Feuchtigkeitsmenge in dem Vakuumbehälter sichergestellt, womit die Kleberauftragseinheit sicher eingelagert werden kann, ohne dass der noch vorhandene aufzutragende Klebstoff aushärtet. Somit kann auf einfache Weise die eingelagerte Kleberauftragseinheit vor Schäden durch das ausgehärtete Medium geschützt werden.

Ferner ist es vorgesehen, dass der Vakuumbehälter eine oder mehrere Aufnahmeeinrichtungen zum Aufnehmen und ggf. Befestigen der Kleberauftragseinheit bzw. Kleberauftragseinheiten in dem Behältergehäuseabschnitt aufweist. Dadurch kann die Kleberauftragseinheit sicher in dem Vakuumbehälter aufgenommen bzw. befestigt werden und somit vor Beschädigungen, die insbesondere während eines Transport des Behälters auftreten können, geschützt werden.

Des Weiteren weist die Vorrichtung eine Vakuumerzeugungsvorrichtung auf, die als eine Venturi-Düse ausgebildet ist, wobei die Vakuumerzeugungsvorrichtung mit dem Durchlass verbunden ist. Ferner ist die Vorrichtung mit einem Druckanschluss zum Anschließen der Vakuumerzeugungsvorrichtung an eine Druckluftquelle versehen.

Die Venturi-Düse hat den Vorteil, dass diese äußerst günstig und unempfindlich ist. Hiermit kann der Vakuumbehälter auf einfache Weise unter Vakuum gesetzt werden, also die ursprünglich in dem Vakuumbehälter vorhandene Umgebungsluft abgesaugt werden. Gemäß einer Ausführungsform der vorliegenden Erfindung, handelt es sich bei der Kleberauftragseinheit um eine PUR-Kleberauftragseinheit (PUR = Polyurethan). Da Polyurethan bei Kontakt mit Wasser zur Aushärtung neigt, ist es notwendig, Polyurethan haltige Klebstoffe hermetisch gegen Luftfeuchtigkeit abzuschirmen. Aus diesem Grund ist die vorgeschlagene Vorrichtung insbesondere gut zur Einlagerung von Kleberauftragseinheiten für PUR-Klebstoffe geeignet, da auf einfache Weise sichergestellt werden kann, dass ein in der Kleberauftragseinheit verbleibender PUR-Klebstoff nicht mit Wasser (Luftfeuchtigkeit) der Umgebungslust in Kontakt kommt.

Des Weiteren kann der Vakuumbehälter eine Dichteinrichtung zum luftdichten Abdichten der Belade/Entladeöffnung aufweisen.

Ferner ist die Vakuumerzeugungsvorrichtung mit dem Durchlass des Vakuumbehälters, der in Form eines Vakuumanschlusses vorgesehen ist, verbunden.

Gemäß einer bevorzugten Ausführungsform der vorliegenden Erfindung umfasst die Vorrichtung ferner eine Vakuum-Überwachungsvorrichtung, zur Überwachung eines Vakuumniveaus in dem Vakuumbehälter, wobei die Vakuum-Überwachungsvorrichtung bevorzugt an dem Vakuumbehälter ausgebildet ist.

Anhand der Vakuum-Überwachungsvorrichtung wird es einem Bediener ermöglicht, das in dem Vakuumbehälter aufgebaute Vakuum zu prüfen. Dies ist insbesondere in Hinblick auf eine Einlagerung von mehreren Tagen vorteilhaft, da in bestimmten Intervallen das vorhandene Vakuum in dem Vakuumbehälter überprüft werden kann. Falls notwendig kann während der Einlagerung des Vakuumbehälters das Vakuum nachgebessert werden. Sollte beispielsweise der Vakuumbehälter nicht vollständig luftdicht sein. Sollte sich also das Vakuum in dem Vakuumbehälter während der Einlagerung reduzieren, kann dieses wieder auf das notwendige Vakuum gebracht werden.

Ferner ist es bevorzugt, die Vakuum-Überwachungsvorrichtung in Form einer einfachen Druckanzeige (Manometer), insbesondere in Form eines elektronischen Manometers mit Alarmfunktion, auszubilden.

Dies ermöglicht es, die Vakuum-Überwachungsvorrichtung anhand eines gängigen Kaufteils (Manometer) auszubilden und ferner einem Bediener die Möglichkeit zu bieten, eine Alarmfunktion einzurichten. Hierbei wird bevorzugt ein minimaler Grenzwert für das Vakuum in dem Vakuumbehälter eingestellt, welcher höher liegt als ein notwendiges Vakuum-Niveau (V_{Not}), bei dem eine ausreichende Feuchtigkeitsfreiheit gewährleistet wird. Erreicht das Vakuum-Niveau in dem Vakuumbehälter den eingestellten Grenzwert, gibt die Vakuum-Überwachungsvorrichtung, insbesondere das Manometer, ein Warnsignal aus.

Gemäß einer weiteren bevorzugten Ausführungsform wird das Vakuum in dem Vakuumbehälter auf 0,3 bar (70%) bis 0,1 bar (90%), bevorzugt auf 0,2 bar (80%) bis 0,15 bar (85%) eingestellt. Hierbei bedeutet z.B. ein Vakuum von 70%, dass der Druck in dem Vakuumbehälter einem absoluten Druck von 0,3 bar entspricht. Somit sollte die Vakuumerzeugungseinrichtung einen Betriebsdruck von -0,7 bar erzeugen können. Gängige Venturi-Düsen, auch Ejektoren genannt, erreichen mit einer kurzen Evakuierungszeit ein Vakuum zwischen 70% bis 85%, also 0,3 bis 0,15 bar.

Bevorzugt wird ferner ein Feuchtigkeitssensor zur Erfassung einer Luftfeuchtigkeit einer Umgebungsluft vorgesehen. Hierbei wird unter Umgebungsluft die Luft verstanden, die die Vorrichtung und insbesondere die Kleberauftragseinheit umgibt. Da die Luftfeuchtigkeit der Umgebungsluft von dem Aufstellungsort abhängig ist, ist es vorteilhaft wenn die Luftfeuchtigkeit anhand eines Feuchtigkeitssensors erfasst werden kann.

Ferner wurde anhand einer Reihe von Versuchen ermittelt, dass ein maximaler Wassergehalt von ca. 5 ppm in der die Kleberauftragseinheit umgebenden Umgebungsluft nicht überschritten werden sollte, um eine Aushärtung des Klebstoffs sicher zu unterbinden. Ein Wassergehalt von 5 ppm entspricht etwa einer Feuchtigkeitsmenge von 0,004 g/m³.Gemäß einer weiteren Ausführungsform der vorliegenden Erfindung sind die Vakuumerzeugungsvorrichtung und die Vakuum-Überwachungsvorrichtung an dem Vakuumbehälter vorgesehen, um den Vakuumbehälter als autarke Vorrichtung zur Lagerung von Kleberauftragseinheiten auszubilden.

Da insbesondere im Falle einer Venturi-Düse die Anschaffungskosten für die Vakuumerzeugungseinrichtung sowie die Vakuumüberwachungsvorrichtung gering sind, ist es möglich eine vollständige erfindungsgemäße Vorrichtung in Form eines autarken Vakuumbehälters auszubilden, an dem sämtliche Komponenten der Vorrichtung angebracht sind. Dies bietet den Vorteil, dass auf eine separate Vorrichtung bzw. Anlage für die Evakuierung der Vakuumbehälter verzichtet werden kann, und die Vakuumbehälter überall verwendet werden können, wo ein Druckanschluss bzw. eine Druckluftquellevorhanden ist.

Alternativ kann gemäß einer nicht beanspruchten Ausbildung der Vakuumbehälter, insbesondere der Vakuumbehälter mit Vakuum-Überwachungsvorrichtung, auswechselbar ausgebildet sein, und zum Aufbau des Vakuums mit einem Vakuumanschluss versehen sein, mit dem der Vakuumbehälter an eine Vakuumerzeugungseinrichtung anschließbar ist. Dies bietet den Vorteil, dass die einzelnen Vakuumbehälter kostengünstiger ausgebildet werden können, da auf eine Vakuumerzeugungsvorrichtung verzichtet werden kann. Dies macht jedoch eine separate Vorrichtung, die die Vakuumerzeugungsvorrichtung bereitstellt, notwendig. Diese Ausführungsform der vorliegenden Erfindung bietet sich insbesondere an, wenn die Steuerungseinheit, die die Luftfeuchtigkeit sowie gegebenenfalls die Umgebungstemperatur bei der Ermittlung des notwendigen Vakuum-Niveaus (V_{Not}) berücksichtigt, komplex und somit teuer ist. In diesem Fall kann die separate Vorrichtung bzw. Basis-Station die Steuereinrichtung, den Luftfeuchtigkeitssensor, ggf. den Umgebungstemperaturfühler und die Vakuumerzeugungsvorrichtung umfassen, womit die auswechselbaren (bzw. autarken) Vakuumbehälter äußerst einfach ausgebildet werden können.

Der Behältergehäuseabschnitt des Vakuumbehälters wird ferner bevorzugt derart eingerichtet, dass es einem Vakuum von 0,3 bar bis 0,1 bar standhalten kann. Hierbei muss insbesondere der Behältergehäuseabschnitt ausreichend ausgesteift sein, um ein nachinnen wölben einer Behältergehäusewand zu vermeiden.

Gemäß einer weiteren Ausführungsform weist die Aufnahmeeinrichtung eine Öffnung auf, in die die Kleberauftragseinheit abschnittsweise eingeführt werden kann. Somit kann die Kleberauftragseinheit sicher im Vakuumbehälter gelagert werden.

Gemäß einer weiteren bevorzugten Variante ist es vorgesehen, dass die Kleberauftragseinheit formschlüssig, insbesondere horizontal formschlüssig, in der Aufnahmeeinrichtung aufgenommen werden kann. Dies ermöglicht eine sehr sichere Anordnung der Kleberauftragseinheit im Vakuumbehälter.

Darüber hinaus kann zusätzlich eine vertikale Fixierung der Kleberauftragseinheit anhand eines Fixierelements, z.B. mittels eines Gummielements, erfolgen. Dieses könnte in einer Variante an einer Unterseite eines Verschlussdeckels angebracht sein.

Des Weiteren kann der Vakuumbehälter derart ausgebildet sein, dass der Durchlass und/oder die Vakuumerzeugungseinrichtung und/oder die Vakuumüberwachungsvorrichtung in einem Verschlussdeckel des Behältergehäuseabschnitts vorgesehen sind.

Ferner ist es vorteilhaft, wenn die Vorrichtung die Kleberauftragseinheit umfasst.

Des Weiteren betrifft die vorliegende Erfindung ein Verfahren zum Lagern zumindest einer Kleberauftragseinheit für Kantenanleimmaschinen, die bevorzugt zur Beleimung von Werkstücken, die zumindest abschnittsweise aus Holz, Holzwerkstoffen oder Holzersatzwerkstoffen bestehen, verwendet werden, insbesondere unter Verwendung der oben beschriebenen Vorrichtung, mit den Schritten: Bereitstellen eines leeren Vakuumbehälters, Einführen mindestens einer Kleberauftragseinheit in ein Behältergehäuseabschnitt des bereitgestellten Vakuumbehälters, ggf. Befestigen der aufgenommenen Kleberauftragseinheit in dem Vakuumbehälter, insbesondere an dem Behältergehäuseabschnitt, Schließen des Vakuumbehälters, nach Aufnahme der Kleberauftragseinheit, wobei ein luftdichter Verschluss hergestellt wird, Absaugen einer in dem Vakuumbehälter vorhanden Umgebungsluft zur Herstellung eines Vakuums im Vakuumbehälter mittels einer Vakuumerzeugungseinrichtung, die in Form einer Venturi-Düse ausgebildet ist und Abschließen des Vakuumbehälters von einer Luftquelle.

Nach dem Aufbau des Vakuums in dem Vakuumbehälter mittels der Vakuumerzeugungseinrichtung, die in Form einer Venturi-Düse ausgebildet ist, wird der Vakuumbehälter von einem Druckluftanschluss bzw. einer Druckluftquelle abgeschlossen, um als ein autarker Vakuumbehälter lagerbar zu sein, wobei das Vakuum bevorzugt 0,3 bis 0,1 bar, weiter bevorzugt 0,2 bar bis 0,15 bar, beträgt. In diesem Fall ist keine separate Basis-Station notwendig, jeder Vakuumbehälter ist mit den notwendigen Komponenten versehen, die für den Aufbau des Vakuums in dem Vakuumbehälter notwendig sind.

Bevorzugt wird anhand einer Vakuum-Überwachungseinrichtung das in dem Vakuumbehälter erzeugte Vakuum überwacht, und falls das Vakuum in dem Vakuumbehälter ein vorbestimmtes, notwendiges Vakuum-Niveau (V_{Not}) unterschreitet, ein Warnsignal ausgegeben. Dies erhöht die Sicherheit, dass das notwendige Vakuum-Niveau (V_{Not}) und damit die notwendige, ausreichend niedrige Feuchtigkeitsmenge in dem Vakuumbehälter gewährleistet werden kann. Erreicht das Vakuum aufgrund einer Leckage des Vakuumbehälters einen vorbestimmten Grenzwert, der einem höheren Vakuum-Niveau als dem notwendigen Vakuum-Niveau (V_{Not}) entspricht, wird ein Warnsignal ausgegeben. Hierbei kann das Warnsignal akustisch, visuell oder über einen Leitrechner, der sämtliche, vorhandenen, befüllten Vakuumbehälter überwacht, ausgegeben werden.

Gemäß einer weiteren Ausführungsform des Verfahrens der vorliegenden Erfindung wird das notwendige Vakuum-Niveau (V_{Not}) in dem Vakuumbehälter basierend auf einer erfassten Luftfeuchtigkeit der Umgebungsluft ermittelt, wobei bevorzugt ebenfalls eine erfasste Umgebungstemperatur berücksichtigt wird. Dies bietet wie oben bereits im Detail ausgeführt den Vorteil, dass das notwendige Vakuum-Niveau (V_{Not}) optimal auf die ortsabhängigen Umgebungsbedingungen eingestellt werden kann, um ein ausreichendes Vakuum-Niveau und damit eine ausreichend niedrige Feuchtigkeitsmenge in dem Vakuumbehälter gewährleisten zu können. Dies bietet den Vorteil, dass das in dem Vakuumbehälter erzeugte Vakuum optimal eingestellt werden kann, was bedeutet, dass ein unnötig starkes bzw. hohes Vakuum in dem Vakuumbehälter vermieden werden kann.

Dadurch ist es möglich, unnötige Energiekosten für die Evakuierung des Vakuumbehälters zu vermeiden.

### Kurze Beschreibung der Zeichnungen

Fig. 1 zeigt eine Ausführungsform der Vorrichtung der vorliegenden Erfindung, bei der die Vakuumerzeugungsvorrichtung an dem Vakuumbehälter vorgesehen ist,
Fig. 2 zeigt eine alternative Ausführungsform der Vorrichtung bei der eine Basis-Station vorgesehen ist, in der autarke Vakuumbehälter eingelegt und evakuiert werden können.

### Detaillierte Beschreibung der bevorzugten Ausführungsformen

Nachfolgend werden anhand der beigefügten Figuren bevorzugte Ausführungsformen der vorliegenden Erfindung im Detail beschrieben. Weitere in diesem Zusammenhang genannte Modifikationen bestimmter Merkmale können jeweils einzeln miteinander kombiniert werden, um neue Ausführungsformen auszubilden.

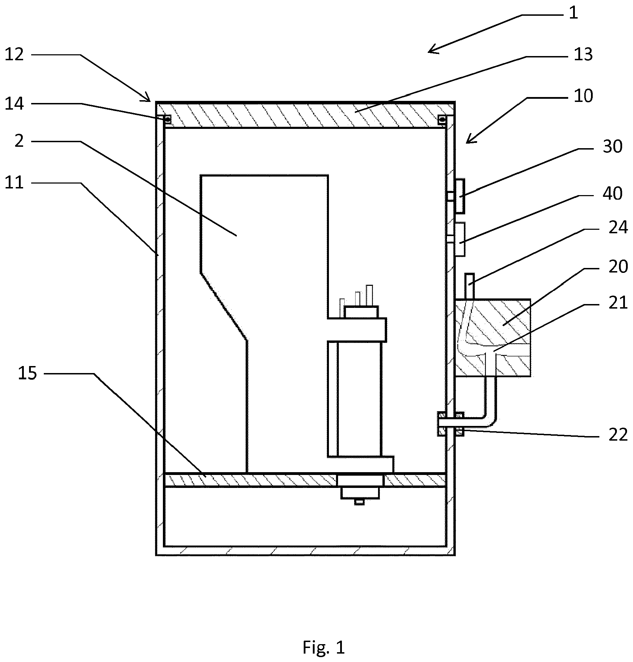

In Fig. 1 ist eine Ausführungsform einer Vorrichtung 1 der vorliegenden Erfindung gezeigt, bei der ein Vakuumanschluss 22 an einem Vakuumbehälter 10 vorgesehen ist. Wie der Fig. 1 entnommen werden kann, weist die Vorrichtung der vorliegenden Ausführungsform einen Vakuumbehälter 10 auf, der durch ein Behältergehäuseabschnitt 11 mit einer Belade/Entladeöffnung 12 und einer Aufnahmeeinrichtung 15 ausgebildet ist. Der Vakuumanschluss 22 ist hierbei an einer Außenseite des Behältergehäuseabschnitts 11 angebracht.

Die Aufnahmeeinrichtung 15 dient zur Aufnahme und Befestigung einer Kleberauftragseinheit 2, wobei grundsätzlich der Vakuumbehälter 11 auch in seiner Dimensionierung so ausgelegt werden kann, dass mehrere Kleberauftragseinheiten 2 aufgenommen werden können. Aus Handhabungsgründen könnte jedoch die Dimensionierung für nur eine Kleberauftragseinheit 2 vorteilhaft sein.

Die Kleberauftragseinheit 2 wird bevorzugt formschlüssig in der Aufnahmeeinrichtung 15 aufgenommen und ggf. gehalten, um unnötige Befestigungsvorrichtungen zu vermeiden und das Aufnehmen der Kleberauftragseinheit 2 in dem Vakuumbehälter 10 zu vereinfachen.

Ferner weist der Vakuumbehälter 10 eine Schließvorrichtung 13 auf, anhand der die Belade/Entladeöffnung 12 des Vakuumbehälters 10 luftdicht verschlossen werden kann. Zum luftdichten Verschließen der Belade/Entladeöffnung 12 weist der Vakuumbehälter 10 ferner eine Dichteinrichtung 14 auf. Bei der in Fig. 1 gezeigten Ausführungsform ist die Belade/Entladeöffnung 12 an einer Oberseite des Behältergehäuseabschnitts 11 ausgebildet. Entsprechend ist die Schließvorrichtung 13 in der Form eines Verschlussdeckels 13 mit Dichteinrichtung 14 bzw. O-Ring ausgebildet.

In der gezeigten Ausführungsform ist die Kleberauftragseinheit 2 in eine Halteplatte 15 eingesetzt, die hierzu eine Aufnahmebohrung aufweist, die die Kleberauftragseinheit horizontal fixiert. Aufgrund des Eigengewichts wird die Kleberauftragseinheit 2 ebenfalls vertikal fixiert. Falls gewünscht, kann zusätzlich eine vertikale Fixierung der Kleberauftragseinheit 2 anhand eines Fixierelements, z.B. in Form eines Gummielements, erfolgen, welches an einer Unterseite des Verschlussdeckels 13 angebracht ist.

Nach Einbringen der Kleberauftragseinheit 2 in den Vakuumbehälter 10 und aufsetzten des Verschlussdeckels 13 auf den Vakuumbehälter 10 kann dieser beispielsweise anhand von Spannhebeln an dem Vakuumbehälter befestigt werden und der luftdichte Verschluss anhand der Dichteinrichtung 14 sichergestellt werden. Die Kleberauftragseinheit 2 für Kantenanleimmaschinen wird zur Beleimung von Werkstücken, die beispielsweise abschnittsweise aus Holz, Holzwerkstoffen oder Holzersatzwerkstoffen bestehen, verwendet, und weist hierzu für gewöhnlich Walzensysteme bzw. Auftragsdüsensysteme auf.

Auch wenn in der vorliegenden Ausführungsform exemplarisch die Belade/Entladeöffnung 12 an der Oberseite des Behältergehäuseabschnitts 11 vorgesehen ist, kann diese auch an einer seitlichen Wand bzw. Umfangswand des Behältergehäuseabschnitts 11 vorgesehen werden. Ferner kann im Gegensatz zu der in Fig. 1 dargestellten Ausführungsform der Vakuumbehälter 10 auch in Form einer Abdeckung (Käseglocke) ausgeführt sein.

Der Vakuumanschluss 22 kann ferner als ein Rückschlagventil 22 ausgebildet sein, das einen Luftaustausch zwischen dem Inneren des Vakuumbehälters 10 und der Umgebungsluft in Richtung nach außen zulässt, jedoch ein Zurückströmen der Luft in den Vakuumbehälter 10 unterbindet. In der Regel wird jedoch ein Steuerventil 22 eingesetzt, mit den Stellungen Entlüften/Belüften und Absperren. Ein Auslass des Rückschlagventils 22 bzw. des Steuerventils 22 (Vakuumanschluss) ist direkt mit einem Eingang einer Vakuumerzeugungseinrichtung 20 verbunden, die in der gezeigten Ausführungsform in Form einer Venturi-Düse 21 ausgebildet ist und an der Außenseite des Vakuumbehälters 10 angebracht ist. Die Venturi-Düse ist weiterhin mit einem Luftanschluss 24 versehen, welcher wiederum an eine Druckluftquelle oder eine Druckluftversorgung angeschlossen werden kann. Die von der Druckluftquelle oder der Druckluftversorgung zur Verfügung gestellte Druckluft stellt die notwendige strömende Luft (Antriebsenergie) für die Venturi-Düse 21 zur Verfügung, anhand der die in dem luftdicht abgeschlossenen Vakuumbehälter vorhandene Luft (Umgebungsluft) durch das Rückschlagventil 22 bzw. das Steuerventil 22 (Vakuumanschluss) abgesaugt werden kann.

Ferner weist der Vakuumbehälter 10 in Form eines Druckmanometers eine Vakuum-Überwachungseinrichtung 30 auf, anhand das mittels der Venturi-Düse 21 erzeugte Vakuum in dem Vakuumbehälter 10 überwacht werden kann. Erreicht das Vakuum in dem Vakuumbehälter 10 ein vorbestimmtes notwendiges Vakuum (V_{Not}), kann die Venturi-Düse 21 von der Druckluftquelle abgetrennt werden. Um später das Vakuum in dem Vakuumbehälter 10 wieder abbauen zu können und den Verschlussdeckel 13 öffnen zu können, kann der Vakuumbehälter 10 ferner mit einem Belüftungsventil versehen sein. Dies ist insbesondere notwendig, falls ein Rückschlagventil 22 und kein Steuerventil 22 eingesetzt wird.

Im Gegensatz zu der in Fig. 1 gezeigten Ausführungsform können auch der Durchlass 22 (Vakuumanschluss 22) und/oder die Vakuumerzeugungseinrichtung 20 und/oder die Vakuumüberwachungsvorrichtung 30 in dem Verschlussdeckel 13 bzw. in einer Abdeckung (Käseglocke) vorgesehen sein.

Wie in der in Fig. 1 gezeigten Ausführungsform gezeigt, kann der Vakuumbehälter 10 mit einem Feuchtigkeitssensor 40 versehen sein, anhand dem die Luftfeuchtigkeit in dem abgeschlossenen Vakuumbehälter 10 erfassbar ist. Ferner kann der Vakuumbehälter 10 falls gewünscht mit einem Temperaturfühler versehen sein, um die Temperatur der Umgebungsluft zu erfassen.

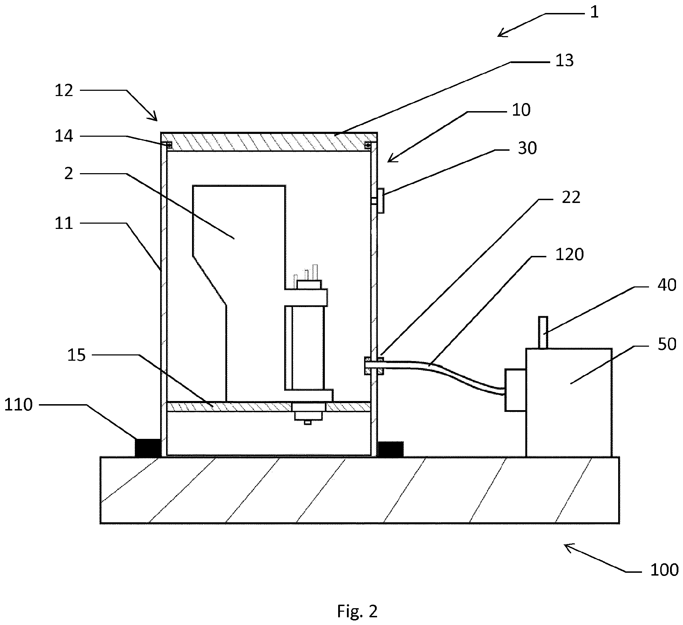

In Fig. 2 ist eine alternative Ausführungsform der Vorrichtung 1 dargestellt. Die hier gezeigte Vorrichtung entspricht im Allgemeinen dem in Fig. 1 gezeigten Aufbau der Vorrichtung. Gleiche oder äquivalente Bauteile sind mit dem gleichen Bezugszeichen versehen.

Die hier gezeigte Ausführungsform unterscheidet sich von der in Fig. 1 dargestellten Ausführungsform darin, dass nicht sämtliche Komponenten der Vorrichtung an dem Vakuumbehälter vorgesehen sind, sondern stattdessen eine Basis-Station 100 vorgesehen ist. Die Basis-Station 100 stellt eine Aufnahmevorrichtung 110 für den Vakuumbehälter 10 sowie eine Vakuumerzeugungsvorrichtung 50 zur Verfügung. Ferner kann die Basis-Station 100 im Gegensatz zum Ausführungsbeispiel von Figur 1 den Feuchtigkeitssensor 40 sowie gegebenenfalls den Temperaturfühler aufweisen.

Die Vakuumerzeugungsvorrichtung 50 der Basis-Station 100 kann mittels eines flexiblen Luftschlauchs 120 einfach an das Rückschlagventil 22 bzw. Steuerventil 22 (Vakuumanschluss), welches in diesem Fall als ein Absauganschluss fungiert, angeschlossen werden. Auf diese Weise kann eine höherwertige Regelungstechnik und Absaugtechnik (z.B. Vakuumpumpe) verwendet werden und die einzelnen Vakuumbehälter 10 können einfacher und somit kostengünstiger gestaltet werden. Diese Ausführungsform bietet sich insbesondre an, wenn eine große Anzahl an Vakuumbehältern notwendig ist.

## Patentansprüche

1. Vorrichtung (1) zum Aufnehmen zumindest einer Kleberauftragseinheit (2) für Kantenanleimmaschinen, umfassend:
einen Vakuumbehälter (10) zur luftdichten Aufnahme der Kleberauftragseinheit (2),
wobei der Vakuumbehälter (10) einen Durchlass (22) zum Evakuieren des Vakuumbehälters (10) aufweist und ferner umfasst:
einen Behältergehäuseabschnitt (11) mit einer Belade/Entladeöffnung (12),
eine Schließvorrichtung (13) zum luftdichten Schließen der Belade/Entladeöffnung (12), und
eine Aufnahmeeinrichtung (15) zum Aufnehmen und ggf. Befestigen der Kleberauftragseinheit (2) im Behältergehäuseabschnitt (11),
**dadurch gekennzeichnet, dass** die Vorrichtung ferner umfasst:
eine Vakuumerzeugungsvorrichtung (20) die als eine Venturi-Düse (21) ausgebildet ist, wobei die Vakuumerzeugungsvorrichtung (20) mit dem Durchlass (22) verbunden ist, und
einen Druckluftanschluss zum Anschließen der Vakuumerzeugungsvorrichtung (20) an eine Druckluftquelle.

2. Vorrichtung (1) nach Anspruch 1, bei der die Klebeauftragseinheit (2) eine PUR-Klebeauftragseinheit ist.

3. Vorrichtung nach einem der vorhergehenden Ansprüche, ferner umfassend eine Dichteinrichtung (14) zum luftdichten Abdichten der Belade/Entladeöffnung (12).

4. Vorrichtung (1) nach einem der vorhergehenden Ansprüche, bei der die Vakuumerzeugungsvorrichtung (20) mit dem am oder im Behältergehäuseabschnitt (11) vorgesehenen Durchlass (22) in Form eines Vakuumanschlusses (22) in Verbindung steht.

5. Vorrichtung (1) nach einem der vorhergehenden Ansprüche, ferner umfassend eine Vakuum-Überwachungsvorrichtung (30), zur Überwachung eines Vakuumniveaus in dem Vakuumbehälter (10), wobei die Vakuum-Überwachungsvorrichtung (30) bevorzugt am Vakuumbehälter (10) ausgebildet ist.

6. Vorrichtung (1) nach Anspruch 5, bei der die Vakuum-Überwachungsvorrichtung (30) in Form eines Manometers, bevorzugt in Form eines Manometers mit Alarmfunktion, ausgebildet ist.

7. Vorrichtung (1) nach einem der vorhergehenden Ansprüche, bei der das Vakuum in dem Vakuumbehälter (10) auf 0,3 bar bis 0,1 bar, bevorzugt 0,2 bar bis 0,15 bar, einstellbar ist.

8. Vorrichtung nach einem der Ansprüche 5 bis 7, bei der die Vakuumerzeugungsvorrichtung (20) und die Vakuum-Überwachungsvorrichtung (30) am Vakuumbehälter (10) vorgesehen sind, um den Vakuumbehälter (10) als autarke Vorrichtung (1) zur Lagerung von Kleberauftragseinheiten (2) auszubilden.

9. Vorrichtung nach einem der vorhergehenden Ansprüche, bei der die Aufnahmeeinrichtung (15) eine Öffnung aufweist, in die die Kleberauftragseinheit (2) abschnittsweise eingeführt werden kann, wobei ferner bevorzugt ist, dass die Kleberauftragseinheit (2) formschlüssig in der Aufnahmeeinrichtung (15) aufgenommen werden kann.

10. Vorrichtung nach einem der vorangegangenen Ansprüche, bei der der Durchlass (22) und/oder die Vakuumerzeugungseinrichtung (20) und/oder die Vakuumüberwachungsvorrichtung (30) in einem Verschlussdeckel (13) des Behältergehäuseabschnitts (11) vorgesehen sind.

11. Vorrichtung nach einem der vorangegangenen Ansprüche mit einer Kleberauftragseinheit (2) für Kantenanleimmaschinen.

12. Verfahren zum Lagern zumindest einer Kleberauftragseinheit (2) für Kantenanleimmaschinen, insbesondere unter Verwendung der Vorrichtung (1) nach einem der vorhergehenden Ansprüche, mit den Schritten:
- Bereitstellen eines Vakuumbehälters (10),
- Einführen der Kleberauftragseinheit (2) in ein Behältergehäuseabschnitt (11) des Vakuumbehälters (10),
- Schließen des Vakuumbehälters (10) nach Aufnahme der Kleberauftragseinheit (2) in einer Aufnahmeeinrichtung (15) im Behältergehäuseabschnitt, wobei ein luftdichter Verschluss hergestellt wird,
- Absaugen einer in dem Vakuumbehälter (10) vorhanden Umgebungsluft zur Herstellung eines Vakuums im Vakuumbehälter (10) mittels einer Vakuumerzeugungseinrichtung (20), die in Form einer Venturi-Düse (21) ausgebildet ist, und
- Abschließen des Vakuumbehälters (10) von einer Luftquelle.

13. Verfahren nach Anspruch 12, bei dem nach Aufbau des Vakuums in dem Vakuumbehälter (10) der Vakuumbehälter (10) von der Luftquelle abgeschlossen wird, um als ein autarker Vakuumbehälter (10) lagerbar zu sein, wobei das Vakuum bevorzugt 0,3 bis 0,1 bar, weiter bevorzugt 0,2 bar bis 0,15 bar, beträgt.

## Claims

1. Device (1) for receiving at least one adhesive application unit (2) for edge banding machines, comprising:
a vacuum container (10) for the airtight housing of the adhesive application unit (2),
wherein the vacuum container (10) has a passage (22) for the evacuation of the vacuum container (10) and further comprises:
a container housing section (11) with a charging/discharging opening (12),
a closure device (13) for the airtight closure of the charging/discharging opening (12), and
a housing device (15) for the housing and optionally fastening of the adhesive application unit (2) in the container housing section (11),
**characterised in that** the device further comprises:
a vacuum generating device (20) which is designed in the form of a venturi nozzle (21), wherein the vacuum generating device (20) is connected with the passage (22), and
a compressed air connection for the connection of the vacuum generating device (20) to a compressed air source.

2. Device (1) according to claim 1, wherein the adhesive application unit (2) is a PUR adhesive application unit.

3. Device according to one of the preceding claims, further comprising a sealing device (14) for the airtight sealing of the charging/discharging opening (12).

4. Device (1) according to one of the preceding claims, wherein the vacuum generating device (20) is connected with the passage (22) provided on or in the container housing section (11) in the form of a vacuum connection (22).

5. Device (1) according to one of the preceding claims, further comprising a vacuum monitoring device (30), for monitoring a vacuum level in the vacuum container (10), wherein the vacuum monitoring device (30) is preferably formed on the vacuum container (10).

6. Device (1) according to claim 5, wherein the vacuum monitoring device (30) is designed in the form of a manometer, preferably in the form of a manometer with alarm function.

7. Device (1) according to one of the preceding claims, wherein the vacuum in the vacuum container (10) can be adjusted to 0.3 bar to 0.1 bar, preferably 0.2 bar to 0.15 bar.

8. Device according to one of the claims 5 to 7,
wherein the vacuum generating device (20) and the vacuum monitoring device (30) are provided on the vacuum container (10) in order to configure the vacuum container (10) as a stand-alone device (1) for the storage of adhesive application units (2).

9. Device according to one of the preceding claims,
wherein the housing device (15) has an opening in which the adhesive application unit (2) can be introduced sectionwise, wherein it is further preferable if the adhesive application unit (2) can be received in the housing device (15) in a form-fitting manner.

10. Device according to one of the preceding claims,
wherein the passage (22) and/or the vacuum generating device (20) and/or the vacuum monitoring device (30) are provided in a sealing cover (13) of the container housing section (11).

11. Device according to one of the preceding claims with an adhesive application unit (2) for edge banding machines.

12. Method for the storage of at least one adhesive application unit (2) for edge banding machines, in particular using the device (1) according to one of the preceding claims, with the steps:
- providing a vacuum container (10),
- introducing the adhesive application unit (2) into a container housing section (11) of the vacuum container (10),
- closing the vacuum container (10) after housing the adhesive application unit (2) in a housing device (15) in the container housing section, wherein an airtight seal is created,
- evacuating ambient air present in the vacuum container (10) in order to create a vacuum in the vacuum container (10) by means of a vacuum generating device (20), which is designed in the form of a venturi nozzle (21), and
- shutting off the vacuum container (10) from an air source.

13. Method according to claim 12, wherein, after the vacuum has been built up in the vacuum container (10), the vacuum container (10) is shut off from the air source in order to be storable as a stand-alone vacuum container (10), wherein the vacuum preferably amounts to 0.3 to 0.1 bar, further preferably 0.2 bar to 0.15 bar.

## Revendications

1. Dispositif (1) pour la réception d'au moins une unité d'application de colle (2) pour des machines de collage de bord, comprenant :
un récipient de vide (10) pour la réception étanche à l'air de l'unité d'application de colle (2),
dans lequel le récipient de vide (10) présente un passage (22) pour l'évacuation du récipient de vide (10) et comprend en outre :
une section de boîtier de récipient (11) avec une ouverture de charge/de décharge (12),
un dispositif de fermeture (13) pour la fermeture étanche à l'air de l'ouverture de charge/de décharge (12), et
un dispositif de réception (15) pour la réception et la fixation éventuelle de l'unité d'application de colle (2) dans la section de boîtier de récipient (11),
**caractérisé en ce que** le dispositif comprend en outre :
un dispositif de génération de vide (20) qui est réalisé comme une buse Venturi (21), dans lequel le dispositif de génération de vide (20) est relié au passage (22), et
un raccord d'air comprimé pour le raccordement du dispositif de génération de vide (20) à une source d'air comprimé.

2. Dispositif (1) selon la revendication 1, dans lequel l'unité d'application de colle (2) est une unité d'application de colle PUR.

3. Dispositif selon l'une quelconque des revendications précédentes, comprenant en outre un dispositif étanche (14) pour rendre étanche à l'air l'ouverture de charge/de décharge (12).

4. Dispositif (1) selon l'une quelconque des revendications précédentes, dans lequel le dispositif de génération de vide (20) est en liaison avec le passage (22) prévu au niveau de ou dans la section de boîtier de récipient (11) sous la forme d'un raccord de vide (22).

5. Dispositif (1) selon l'une quelconque des revendications précédentes, comprenant en outre un dispositif de surveillance de vide (30) pour la surveillance d'un niveau de vide dans le récipient de vide (10), dans lequel le dispositif de surveillance de vide (30) est réalisé de préférence au niveau du récipient de vide (10).

6. Dispositif (1) selon la revendication 5, dans lequel le dispositif de surveillance de vide (30) est réalisé sous la forme d'un manomètre, de préférence sous la forme d'un manomètre avec une fonction d'alarme.

7. Dispositif (1) selon l'une quelconque des revendications précédentes, dans lequel le vide est réglable dans le récipient de vide (10) de 0,3 bar à 0,1 bar, de préférence de 0,2 bar à 0,15 bar.

8. Dispositif selon l'une quelconque des revendications 5 à 7, dans lequel le dispositif de génération de vide (20) et le dispositif de surveillance de vide (30) sont prévus au niveau du récipient de vide (10) afin de réaliser le récipient de vide (10) en tant que dispositif (1) autonome pour le logement d'unités d'application de colle (2).

9. Dispositif selon l'une quelconque des revendications précédentes, dans lequel le dispositif de réception (15) présente une ouverture, dans laquelle l'unité d'application de colle (2) peut être introduite par sections, dans lequel il est en outre préféré que l'unité d'application de colle (2) puisse être reçue à complémentarité de formes dans le dispositif de réception (15).

10. Dispositif selon l'une quelconque des revendications précédentes, dans lequel le passage (22) et/ou le dispositif de génération de vide (20) et/ou le dispositif de surveillance de vide (30) sont prévus dans un couvercle de fermeture (13) de la section de boîtier de récipient (11).

11. Dispositif selon l'une quelconque des revendications précédentes avec une unité d'application de colle (2) pour des machines de collage de bord.

12. Procédé de logement d'au moins une unité d'application de colle (2) pour des machines de collage de bord, en particulier en utilisant le dispositif (1) selon l'une quelconque des revendications précédentes, avec les étapes consistant en :
- la fourniture d'un récipient de vide (10),
- l'introduction de l'unité d'application de colle (2) dans une section de boîtier de récipient (11) du récipient de vide (10),
- la fermeture du récipient de vide (10) après réception de l'unité d'application de colle (2) dans un dispositif de réception (15) dans la section de boîtier de récipient, dans lequel une fermeture étanche à l'air est fabriquée,
- l'aspiration d'un air ambiant présent dans le récipient de vide (10) pour l'établissement d'un vide dans le récipient de vide (10) au moyen d'un dispositif de génération de vide (20) qui est réalisé sous la forme d'une buse Venturi (21), et
- l'isolation du récipient de vide (10) d'une source d'air.

13. Procédé selon la revendication 12, dans lequel, après l'établissement du vide dans le récipient de vide (10), le récipient de vide (10) est isolé de la source d'air afin de pouvoir être logé comme un récipient de vide (10) autonome, dans lequel le vide s'élève de préférence de 0,3 à 0,1 bar, plus préférentiellement de 0,2 bar à 0,15 bar.
